# EUROPÄISCHE PATENTANMELDUNG

(11) **EP 1 416 607 A2**
(43) Veröffentlichungstag der Anmeldung: **06.05.2004**
(21) Anmeldenummer: 03021154.4
(22) Anmeldetag: 23.09.2003
(51) Int. Cl.: H02K 1/14

(54) **Elektromotor mit sphärischem Luftspalt**

(30) Priorität: 30.10.2002 DE 10251647
(71) Anmelder: Laing, Oliver, 70435 Stuttgart (DE); Laing, Karsten, 71566 Althütte (DE); Laing, Birger, 71672 Marbach (DE)
(72) Erfinder: Laing, Karsten, 71566 Althütte (DE)
(74) Vertreter: Hoeger, Stellrecht & Partner

(57) **Zusammenfassung**

Um einen Elektromotor, umfassend einen Läufer und einen Stator, wobei der Läufer sphärisch gelagert ist und dem Stator zugewandt sphärisch ausgebildet ist, zu schaffen, welcher einen hohen Wirkungsgrad aufweist, wird vorgeschlagen, daß der Stator einen magnetischen Rückschlußkörper aufweist, welcher aus einem gepreßten Pulvermaterial hergestellt ist, und daß der Rückschlußkörper dem Läufer zugewandt mindestens segmentweise sphärisch ausgebildet ist.

## Beschreibung

Die Erfindung betrifft einen Elektromotor, umfassend einen Läufer und einen Stator, wobei der Läufer sphärisch gelagert ist und dem Stator zugewandt sphärisch ausgebildet ist.

Derartige Elektromotoren werden insbesondere bei Kreiselpumpen eingesetzt. Sie haben den Vorteil, daß sich über sie eine weitere spielfreie Lagerung des Läufers erreichen läßt. Solche Elektromotoren sind beispielsweise in der DE 33 02 349 A1 oder DE 15 38 717 beschrieben.

Der Erfindung liegt die Aufgabe zugrunde, einen Elektromotor der eingangs genannten Art zu schaffen, welcher einen hohen Wirkungsgrad aufweist.

Diese Aufgabe wird bei dem eingangs genannten Elektromotor erfindungsgemäß dadurch gelöst, daß der Stator einen magnetischen Rückschlußkörper aufweist, welcher aus einem gepreßten Pulvermaterial hergestellt ist, und daß der Rückschlußkörper dem Läufer zugewandt mindestens segmentweise sphärisch ausgebildet ist.

Durch die Herstellung des Rückschlußkörpers aus einem gepreßten Pulvermaterial ergibt sich eine hohe Variabilität bezüglich der Formgebung für den Rückschlußkörper. Dieser kann dadurch optimiert werden, um bei minimalen Verlusten eine hohe Magnetflußübertragung zu dem Läufer zu gewährleisten. Insbesondere läßt sich eine dreidimensionale optimierte Formgebung erreichen.

Bei bekannten Pulvermaterialien wie SOMALOY der Firma Höganäs AB, Schweden (SOMALOY ist eine eingetragene Marke) sind Eisenkörner und insbesondere weichmagnetische Eisenkörner gegeneinander elektrisch isoliert. Es ergeben sich dann in einem Rückschlußkörper nur geringe Wirbelstromverluste, während die erforderlichen magnetischen Eigenschaften vorhanden sind. Gleichzeitig mit den optimierten funktionellen Eigenschaften (große Magnetleitfähigkeit, kleine elektrische Leitfähigkeit) läßt sich somit auch eine optimale geometrische Gestalt des Rückschlußkörpers herstellen.

Wenn der Rückschlußkörper dem Läufer zugewandt mindestens segmentweise sphärisch ausgebildet ist, dann läßt sich bei kleinem und insbesondere im wesentlichen kugelschalenförmigen Luftspalt ein Sphäromotor realisieren. Bei kleinem Luftspalt ist die Magnetübertragung von dem Stator zu dem Läufer optimiert.

Über die Herstellung des Rückschlußkörpers mittels eines gepreßten Pulvermaterials kann auch die Einkopplung des Magnetfeldes durch Spulen an dem Rückschlußkörper in den Rückschlußkörper optimiert werden. Es läßt sich erreichen, daß derjenige Teil des Rückschlußkörpers, welcher im Bereich des magnetfelderzeugenden Teils der Spule liegt, einen Querschnitt aufweist, der ausreicht (und insbesondere gerade noch ausreicht), Magnetfluß ohne Übersättigung zu transportieren, während der magnetflußübertragende Bereich an den Läufer eine große Oberfläche aufweist. Insgesamt läßt sich dadurch ein hoher Wirkungsgrad erreichen und der Materialaufwand für Wicklungen minimieren.

Günstig ist es, wenn der Rückschlußkörper ein kompakter Körper ist oder kompakte Rückschlußkörper-Elemente aufweist. Der Rückschlußkörper kann dabei einteilig sein und insbesondere einstückig sein oder aus mehreren Teilen zusammengesetzt sein. Es läßt sich dadurch eine einfache Montage realisieren. Darüber hinaus ergibt sich eine optimierte Magnetfeldeinkopplung.

Insbesondere ist der Rückschlußkörper aus einer Mehrzahl von Rückschlußkörper-Elementen zusammengesetzt, wobei es sich um getrennte Elemente oder um einstückig zusammenhängende Elemente handeln kann. Die Rückschlußkörper-Elemente lassen sich optimieren, um einen hohen elektrischen Wirkungsgrad für den Elektromotor zu erzielen.

Ein Rückschlußkörper läßt sich bei getrennten Rückschlußkörper-Elementen dadurch herstellen, daß benachbarte Rückschlußkörper-Elemente über eine Steckverbindung verbunden werden. Es läßt sich dann auf einfache und schnelle Weise ein Rückschlußkörper herstellen, wobei je nach Anwendung Spulenaufnahmen unterschiedlicher Art herstellbar sind.

Insbesondere umfaßt der Rückschlußkörper eine Mehrzahl von Segmenten, welche dem Stator zugewandt jeweils eine sphärische Oberfläche aufweisen, das heißt eine Oberfläche, deren Einhüllende Teil einer Kugeloberfläche ist. Ein solcher Rückschlußkörper läßt sich auf einfache Weise herstellen und bezüglich seiner Formgebung optimieren, so daß ein hoher elektrischer Wirkungsgrad bei minimiertem Materialeinsatz bezüglich Spulenwindungen erreicht ist. Ein Segment kann dabei einstückig an einem Rückschlußkörper gebildet sein oder an einem Rückschlußkörper-Element gebildet sein, wobei dann mehrere Rückschlußkörper-Elemente den Rückschlußkörper bilden.

Bei einer Variante einer Ausführungsform sind benachbarte Segmente magnetisch getrennt, indem beispielsweise zwischen solche benachbarten Elementen ein Spalt gebildet ist. Auf diese Weise läßt sich eine mehrpolige Statoranordnung realisieren. Es kann aber alternativ auch vorgesehen sein, daß der Rückschlußkörper eine geschlossene sphärische Oberfläche aufweist, wobei dann die magnetische Trennung über elektrische Trennung benachbarter Spulen erfolgt.

Insbesondere ist es dann vorgesehen, daß Segmente miteinander über einen Rückschlußbereich verbunden sind, wobei der Rückschlußbereich benachbarte Segmente miteinander verbinden kann oder gegenüberliegende Segmente miteinander verbinden kann, um so den magnetischen Rückschluß herzustellen.

Insbesondere umgibt der Rückschlußkörper den Läufer ringförmig, wobei je nach Anwendung der Rückschlußkörper eine geschlossene Oberfläche aufweisen kann oder eine Mehrzahl von sphärischen Oberflächen mit einer sphärischen Einhüllenden.

Günstig ist es, wenn das Pulvermaterial Eisenkörner und insbesondere Weicheisenkörner umfaßt, welche elektrisch gegeneinander isoliert sind. Ein solches Pulvermaterial ist unter der Bezeichnung SOMALOY von der Firma Höganäs, Schweden, bekannt. Bei optimierten magnetischen Eigenschaften lassen sich dann Wirbelstromverluste in dem Elektromotor minimieren, so daß wiederum ein hoher Wirkungsgrad erzielt werden kann.

Ganz besonders vorteilhaft ist es, wenn der Rückschlußkörper mindestens eine Spulenaufnahme aufweist, um Windungen für den Stator aufzunehmen.

Es ist dann vorgesehen, daß die Spulenaufnahme mit einer elektrischen Isolierung versehen ist und/oder eine aufgenommene Spule zur Spulenaufnahme hin mit einer elektrischen Isolierung versehen ist. Die elektrische Isolierung läßt sich beispielsweise mittels einer Isolierungsschicht auf der Spulenaufnahme bereitstellen oder mit einer entsprechenden Umhüllung der aufgenommenen Spule. Die elektrische Isolierung kann auch über eine entsprechende Isolierhülse gebildet sein, welche auf der Spulenaufnahme sitzt, wobei dann wiederum die Spule auf der Isolierhülse sitzt.

Besonders günstig ist es, wenn die mindestens eine Spulenaufnahme so angeordnet und ausgebildet ist, daß aufgenommene Spulen nicht über den sphärischen Bereich des Rückschlußkörpers in Richtung des Läufers hinausragen. Dadurch kann die Breite eines Luftspaltes zwischen dem Läufer und dem Rückschlußkörper optimiert werden, so daß eine optimale Magnetflußübertragung auf den Läufer gewährleistet ist. Bei einer Umwälzpumpe beispielsweise, bei der ein erfindungsgemäßer Elektromotor eingesetzt wird, kann dann der Luftspalt so dimensioniert werden, daß keine wesentliche Reibungsbremsung eintritt.

Insbesondere ist dabei ein Luftspalt, welcher zwischen dem Läufer und dem sphärischen Bereich des Rückschlußkörpers gebildet ist, spulenfrei, so daß die sphärische Oberfläche des Stators alleine durch den Rückschlußkörper bestimmt ist und nicht durch an dem Rückschlußkörper sitzende Spulen.

Auf fertigungstechnisch einfache Weise lassen sich Spulenaufnahmen bilden, wenn der Rückschlußkörper eine Mehrzahl von Ausnehmungen als Spulenaufnahmen oder zur Bildung von Spulenaufnahmen aufweist. In solche Ausnehmungen lassen sich dann Spulen einsetzen bzw. diese lassen sich in solchen Ausnehmungen wickeln.

Günstigerweise ist dabei eine Ausnehmung, welche einen dem Läufer zugewandten Bereich hat, gegen die sphärische Oberfläche des Rückschlußkörpers zurückgesetzt. Es ist dadurch ein Bereich bereitgestellt, welcher eine Spule zumindest teilweise aufnehmen kann, ohne daß die Spule dann selber über den sphärischen Oberflächenbereich des Rückschlußkörpers hinausragt.

Es kann vorgesehen sein, daß eine Spule auf eine Spulenaufnahme gewickelt ist, insbesondere wenn der Rückschlußkörper einstückig ausgebildet ist.

Es kann aber auch vorgesehen sein, daß eine vorgefertigte Spule auf eine Spulenaufnahme gesteckt oder gesetzt ist. Dies ist insbesondere möglich, wenn der Rückschlußkörper aus getrennten Rückschlußkörper-Elementen zusammengesetzt wird.

Weiterhin ist es besonders günstig, wenn eine Spulenaufnahme so dimensioniert ist, daß der Anteil des Rückschlußkörpers, welcher im Bereich des erzeugten Magnetfelds der aufgenommenen Spule liegt, wesentlich kleiner ist als der Bereich des Rückschlußkörpers, welcher das erzeugte Magnetfeld auf den Läufer hin überträgt. Dadurch lassen sich die magnetischen Verluste in dem Rückschlußkörper minimieren und die Magnetflußübertragung zu dem Läufer hin optimieren. Insgesamt erreicht man dadurch einen hohen elektrischen Wirkungsgrad für den erfindungsgemäßen Elektromotor.

Gans besonders günstig ist es, wenn die Spulenaufnahme so dimensioniert ist, daß ein ausreichender Bereich des Rückschlußkörpers bereitgestellt ist, um Magnetfluß unterhalb der Sättigung zu transportieren. Dadurch lassen sich magnetische Verluste gering halten und damit der elektrische Wirkungsgrad maximieren. Andererseits läßt sich über die sphärische Oberfläche bzw. sphärische Oberflächen des Rückschlußkörpers erreichen, daß über eine maximale Fläche Magnetfluß zu dem Läufer hin transportierbar ist. Es läßt sich dann ein optimales Verhältnis der Flächen bezüglich des Luftübergangs des Rückschlußkörpers und des Magnetfeldübergangs an den Spulenaufnahmen bereitstellen. Bei einem Wechselstrom-Motor liegt das Verhältnis der entsprechenden Flächen beispielsweise im Bereich 2,5:1 bei einem pulvergepreßten Rückschlußkörper aus SOMALOY. (Dieses Verhältnis ist materialabhängig.)

Günstigerweise ist eine Spulenaufnahme so ausgebildet, daß eine Spule mit rundem oder näherungsweise rundem Querschnitt aufnehmbar ist. Bei rundem Querschnitt ist der Wicklungsanteil der Spule (bei vorgegebenem Querschnitt) minimiert. Durch die erfindungsgemäße Lösung lassen sich Spulengeometrien verwenden, bei denen das Verhältnis zwischen den Querdurchmessern näher bei Eins ist. (Im Idealfall, bei einer Spule mit rundem Querschnitt, liegt das Verhältnis bei Eins.)

Je nach Polanzahl weist der Rückschlußkörper vorzugsweise eine Mehrzahl von beabstandeten Ausnehmungen als Spulenaufnahmen auf, welche gegenüber der sphärischen Oberfläche zurückgesetzt sind.

Insbesondere sind dabei die Ausnehmungen gleichmäßig verteilt um einen Innenumfang des Rückschlußkörpers angeordnet, um so möglichst symmetrische Verhältnisse bereitzustellen.

Bei einer Ausführungsform liegt eine Spulenachse einer in der Spulenaufnahme sitzenden Spule im wesentlichen in Umfangsrichtung des Rückschlußkörpers, wobei die Spulenachse gerade sein kann, so daß die Spulenachse im wesentlichen parallel zur Tangentenrichtung sitzt. Die Spulenachse kann auch gekrümmt sein und insbesondere einem Kreisumfangsabschnitt entsprechen.

Bei einer alternativen Ausführungsform ist eine Spulenachse einer in der Spulenaufnahme sitzenden Spule im wesentlichen radial ausgerichtet.

Wenn der Rückschlußkörper Ausnehmungen aufweist, welche dem Läufer zugewandt sind, dann läßt sich der Rückschlußkörper mit geringer axialer Höhe ausbilden und die Höhenabmessungen des Elektromotors lassen sich gering halten. Ebenso lassen sich die Querabmessungen gering halten. Es kann aber auch vorgesehen sein, daß die mindestens eine Spulenaufnahme hinter oder unter dem dem Läufer zugewandten sphärischen Oberflächenbereich des Rückschlußkörpers angeordnet ist, um so beispielsweise eine geschlossene sphärische Oberfläche bereitzustellen.

Es kann dann auch vorgesehen sein, daß der Rückschlußkörper einen quer zu einer Drehachse des Läufers liegenden Verbindungsbereich aufweist, welcher eine magnetische Querverbindung bereitstellt, um so den Rückschluß zu optimieren.

Dieser Verbindungsbereich kann dann auch dazu genutzt werden, die mindestens eine Spulenaufnahme zu bilden.

Die erfindungsgemäße Ausbildung des Rückschlußkörpers läßt sich bei einer Vielzahl von Läuferausgestaltungen realisieren. Bei dem Läufer kann es sich beispielsweise um eine Käfigläufer, um einen magnetfelderzeugenden Läufer (Synchronläufer) oder um einen Hystereseläufer handeln. Bei dem Elektromotor selber kann es sich um einen Wechselstrom-Elektromotor oder einen Gleichstrom-Elektromotor handeln.

Bei einer alternativen Ausführungsform sind mehrere Spulen als torusförmige Spulen auf dem Rückschlußkörper angeordnet. Diese folgen der Kontur des Rückschlußkörpers, um so so wenig wie möglich in den Luftspalt zu ragen und bei sphärischer Oberfläche des Rückschlußkörpers einen Luftspalt minimierter Breite zu erhalten. Bei dieser Ausführungsform ist ein Teil der Windungen der Spule in dem Luftspalt angeordnet, wobei dieser Anteil jedoch minimiert ist.

Dadurch, daß die Spulen torusförmig ausgebildet sind und insbesondere auch noch der Kontur des Rückschlußkörpers an seiner dem Läufer zugewandten Seite folgen, ist ein minimierter Flächenanteil der Spulen in dem Luftspalt angeordnet. Bei dieser Ausführungsform bildet der Rückschlußkörper, der insbesondere einstückig ausgebildet sein kann, als Ganzes eine Spulenaufnahme für eine Mehrzahl von Spulen. Benachbarte Spulen sind elektrisch voneinander getrennt. Die Anzahl der Spulen entspricht der Anzahl der Pole.

Eine Windungsachse ist dabei im wesentlichen parallel zu einer Umfangsrichtung des Rückschlußkörpers und fällt insbesondere mit dieser zusammen. Die Windungsachse ist dabei gekrümmt.

Die Erfindung betrifft ferner eine Umwälzpumpe, welche mit einem erfindungsgemäßen Elektromotor versehen ist.

Diese Umwälzpumpe weist die bereits im Zusammenhang mit dem erfindungsgemäßen Elektromotor erläuterten Vorteile auf.

Insbesondere ist dabei eine Trennwand in einen Luftspalt zwischen Läufer und Rückschlußkörper angeordnet. Diese Trennwand trennt den Naßbereich von dem Rückschlußkörper ab. Durch den erfindungsgemäßen Rückschlußkörper läßt sich die Breite des Luftspaltes so einstellen, daß auch mit einer Trennwand der Luftspalt noch dahingehend breit gewählt werden kann, daß keine Reibungsbremsung eintritt, jedoch ein hoher Magnetflußtransport zum Läufer gewährleistet ist.

Die nachfolgende Beschreibung bevorzugter Ausführungsformen dient im Zusammenhang mit der Zeichnung der näheren Erläuterung der Erfindung.
Es zeigen:
- Figur 1: eine perspektivische Schnittansicht eines Ausführungsbeispiels einer erfindungsgemäßen Umwälzpumpe;
- Figur 2: schematisch eine Teilansicht eines Läufers und eines Stators und die wirkenden Kräfte;
- Figur 3: eine Teil-Schnittansicht eines Ausführungsbeispiels eines Lagers zur Lagerung des Läufers;
- Figur 4: eine Draufsicht auf ein erstes Ausführungsbeispiel eines erfindungsgemäßen Rückschlußkörpers;
- Figur 5: eine perspektivische Teilansicht des Rückschlußkörpers gemäß Figur 4 mit aufgenommenen Wicklungen;
- Figur 6: eine Variante der Ausführungsform gemäß Figur 5;
- Figur 7: eine perspektivische Teilansicht eines zweiten Ausführungsbeispiels eines erfindungsgemäßen Rückschlußkörpers;
- Figur 8: eine perspektivische Teil-Schnittansicht eines dritten Ausführungsbeispiels eines erfindungsgemäßen Rückschlußkörpers;
- Figur 9: eine Teil-Schnittansicht eines vierten Ausführungsbeispiels eines erfindungsgemäßen Rückschlußkörpers;
- Figur 10: eine Teil-Draufsicht auf ein fünftes Ausführungsbeispiel eines erfindungsgemäßen Rückschlußkörpers;
- Figur 11: eine Schnittansicht längs der Linie 11-11 gemäß Figur 10;
- Figur 12: eine seitliche Schnittansicht eines sechsten Ausführungsbeispiels eines erfindungsgemäßen Rückschlußkörpers;
- Figur 13: eine Schnittansicht längs der Linie 13-13 gemäß Figur 12;
- Figur 14: eine seitliche Schnittansicht eines siebten Ausführungsbeispiels eines erfindungsgemäßen Rückschlußkörpers;
- Figur 15: eine Draufsicht auf den Rückschlußkörper gemäß Figur 14;
- Figur 16: eine seitliche Schnittansicht eines achten Ausführungsbeispiels eines erfindungsgemäßen Rückschlußkörpers;
- Figur 17: eine Draufsicht auf den Rückschlußkörper gemäß Figur 16;
- Figur 18: eine schematische Seitenansicht einer Ausführungsform eines Rückschlußkörperelements, und
- Figur 19: ein Ausführungsbeispiel einer Toroidalwicklung auf einem Rückschlußkörper.

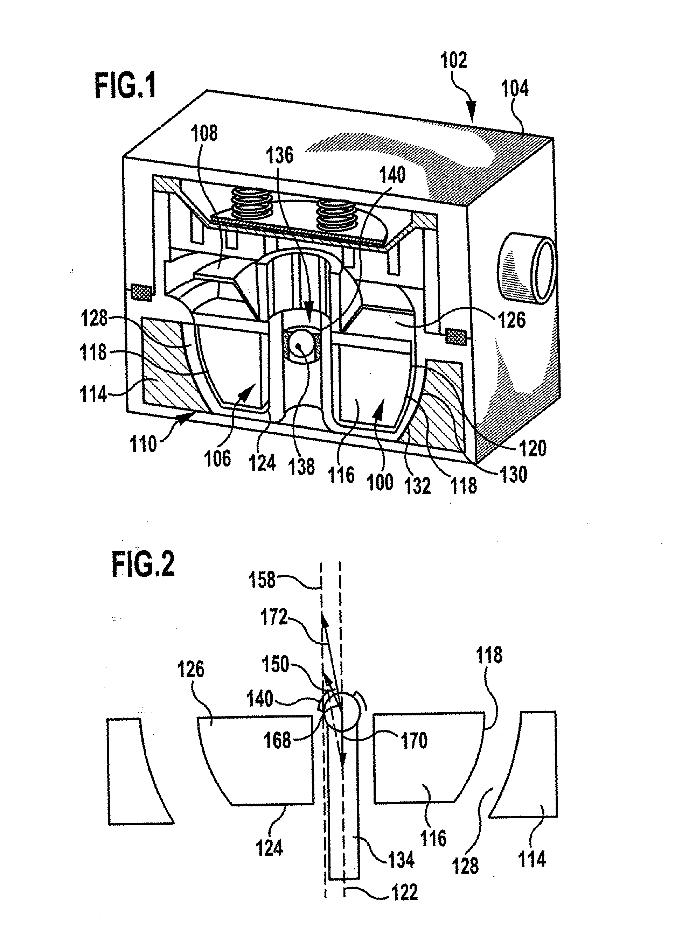

Ein Ausführungsbeispiel eines erfindungsgemäßen Elektromotors, welcher in Figur 1 als Ganzes mit 100 bezeichnet ist, ist Teil einer Umwälzpumpe 102, so daß eine Pumpen-Motor-Einheit gebildet ist. Die Umwälzpumpe 102 umfaßt dabei ein Gehäuse 104, in welchem der Elektromotor 100 angeordnet ist. Die Umwälzpumpe 102 ist, wie unten noch näher beschrieben, als Kreiselpumpe ausgebildet.

Der Elektromotor 100 weist einen Läufer (Rotor) 106 auf. Mit diesem drehfest verbunden ist ein Schaufelrad 108, um eine Läufer-Schaufelrad-Einheit zu bilden.

Der Elektromotor 100 umfaßt ferner einen Stator 110 mit einer oder mehreren Wicklungen und einem Rückschlußkörper 114 beispielsweise in der Form eines weichmagnetischen, einstückigen oder mehrstückigen Rückschlußrings. Ausführungsbeispiele erfindungsgemäßer Rückschlußkörpers werden unten näher beschrieben. Der Stator 110 ist drehfest in dem Gehäuse 104 angeordnet.

Der Läufer 106 ist bei einer Ausführungsform magnetfelderzeugend ausgebildet. Dazu umfaßt er ein oder mehrere Magnetelemente 116, bei denen es sich insbesondere um Permanentmagnete handelt, die über eine radiale Richtung magnetisiert sind. Insbesondere sind die Magnetelemente 116 über Permanentmagnete hoher Koerzitivfeldstärke gebildet, wobei die magnetischen Pole der einzelnen Magnetelemente über dem Umfang des Läufers 106 mit alternierender Polung angeordnet sind.

Eine dem Stator 110 zugewandte Oberfläche 118 des Läufers 106 ist Teil einer Kugeloberfläche, wobei die Magnetelemente 116 dieser Oberflächengestalt folgen. Zum Schutz der Magnetelemente 116 weist der Läufer 106 eine Ummantelung 120 auf, welche aus Kunststoff oder Edelstahl hergestellt ist, welche die Oberfläche 118 bildet.

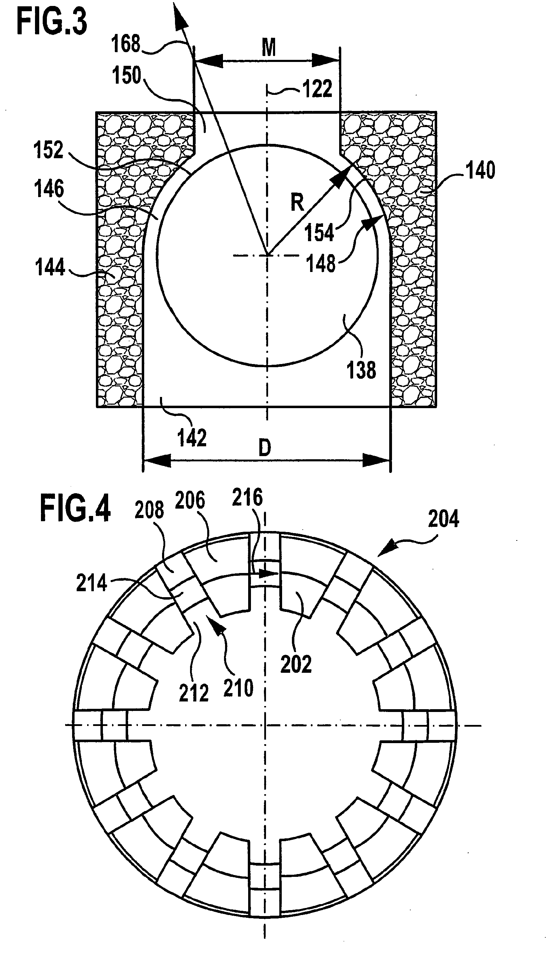

Die sphärische Oberfläche 118 entspricht dabei einem Abschnitt einer gedachten Kugel, welche senkrecht zu einer Achse 122 (Figur 3), welche durch den Mittelpunkt der gedachten Kugel läuft, geschnitten wurde. Ein dem Gehäuse 104 zuweisender Bereich 124 des Läufers 106 weist dadurch eine im wesentlichen ebene Oberfläche auf. Gleiches gilt für einen Bereich 126 des Läufers 106, welcher dem Schaufelrad 108 hin zuweist.

Zwischen dem Läufer 106 und dem Stator 110 und insbesondere dessen Rückschlußkörper 114 ist ein Luftspalt 128 zum magnetischen Rückschluß gebildet. Eine in dem Luftspalt 128 angeordnete Wand 132 wirkt dabei als Trennwand zu dem Naßbereich der Umwälzpumpe 102, um den Rückschlußkörper 114 mit den Wicklungen zu schützen.

Der Läufer 106 ist sphärisch gelagert, um so eine Kreiselpumpe zu bilden. Ein entsprechendes Lager 136 umfaßt einen als Kugel ausgebildeten Gleitkörper 138, welcher an einer Haltesäule 134 (Figur 2) sitzt. Diese Haltesäule ist drehfest in dem Gehäuse 104 angeordnet. Der Mittelpunkt des Gleitkörpers 138 sitzt auf der Achse 122 des Läufers. Ferner fällt der Mittelpunkt des Gleitkörpers 138 im wesentlichen zusammen mit dem Mittelpunkt der gedachten Kugel, welche die Oberfläche 118 bildet.

Das Lager 136 umfaßt ferner eine Lagerschale 140 (Figur 3), welche beispielsweise aus Kohle hergestellt ist. Der Gleitkörper 138, der aus einem Hartstoffmaterial und insbesondere Keramikmaterial hergestellt ist, kann relativ zur Lagerschale 140 in dieser gleiten. Die Lagerschale 140 ist drehfest mit dem Läufer 106 verbunden. Dadurch läßt sich dann eine weitgehend spielfreie Lagerung des Läufers 106 in dem Gehäuse 104 realisieren.

Die Lagerschale 140 umfaßt, wie in Figur 3 gezeigt, einen hohlzylindrischen Abschnitt 142 mit einem Durchmesser D, welcher im wesentlichen einem Kugeldurchmesser d des Gleitkörpers 138 entspricht. Zwischen der Kugel 138 und einer Lagerschalenwand 144 ist ein Luftspalt 146 gebildet, dessen Ausdehnung quer zur Achse 122 erheblich kleiner ist als der Durchmesser d des Gleitkörpers 138.

Auf den hohlzylindrischen Abschnitt 142 folgt in axialer Richtung (in Richtung der Achse 122) ein sphärischer Abschnitt 148, wobei der Mittelpunkt der gedachten, diesen sphärischen Abschnitt bildenden Kugel mit dem Mittelpunkt des Gleitkörpers 138, welcher eine Gleitkugel für das Lager 136 ist, zusammenfällt. Der Radius R dieser gedachten Kugel, welchen den sphärischen Abschnitt 148 bildet, entspricht dabei dem Radius d/2 der Kugel des Gleitkörpers 138.

Um die Achse 122 des Läufers 106 ist in der Lagerschale 140 ein zentraler materialfreier Bereich 150 gebildet. Dieser ist damit in dem sphärischen Abschnitt 148 angeordnet und steht über den sphärischen Abschnitt 148 in Verbindung mit dem hohlzylindrischen Abschnitt 142. Dieser zentrale materialfreie Bereich 150 ist kugelsymmetrisch bezüglich der Achse 122 ausgebildet und weist einen Durchmesser M auf.

Der zentrale materialfreie Bereich 150 bildet eine Schmierbohrung, über die sich ein Schmierungsmedium wie Förderflüssigkeit einer Gleitfläche 152 des Gleitkörpers 138 und einer Gleitfläche 154 der Lagerschale 140 insbesondere am sphärischen Abschnitt 148 zuführen läßt.

Der Gleitkörper 138, welcher an der Haltesäule 134 sitzt, ist in den hohlzylindrischen Abschnitt 142 der Lagerschale 140 eingetaucht und ist über den sphärischen Abschnitt 148 relativ zu der Lagerschale 140 gleitbar. Über den sphärischen Abschnitt 148 lassen sich axiale und radiale Kräfte des Läufers 106 auf die Kugel 138 übertragen. Entsprechend übt dann der Gleitkörper 138 eine Gegenkraft auf den Läufer 106 und damit auf die Lagerschale 140 aus.

Der Läufer 106 ist bei einer Ausführungsform des erfindungsgemäßen Elektromotors über die Magnetelemente 116 magnetfelderzeugend, das heißt das Magnetfeld geht von dem Läufer 106 aus. In dem Luftspalt 128 verlaufen Kraftlinien zwischen dem Läufer 106 und dem weichmagnetischen Rückschlußkörper 114 des Stators 110. Diese verlaufen dabei aber nicht parallel, sondern weisen eine relativ starke Krümmung auf. Dies hat zur Folge, daß, wenn der Läufer 106 außermittig bezüglich des Stators 110 verschoben wird, das heißt insbesondere, wenn eine Achse 158 des Stators 110 und die Achse 122 des Läufers 106 nicht mehr zusammenfallen, große Radialkraftdifferenzen auftreten; ein Magnetpol des Magneten 116, welcher aufgrund der Außermittigkeit näher an dem Rückschlußkörper 114 liegt, erfährt dabei eine größere Radialkraft als der diametral gegenüberliegende Magnetpol, der eine größeren Abstand zu dem Rückschlußkörper 114 hat. Beim Herausrücken aus einer zentrischen Position nimmt damit bei dem zu dem Rückschlußkörper 114 näherrückenden Magnetpol die radiale Kraft zu, während sie bei einem diametral gegenüberliegenden Magnetpol abnimmt. Dadurch treten Stabilitätsprobleme bei der Lagerung auf.

Neben oder anstatt einer Asymmetrie zwischen Läufer 106 und Stator 110 aufgrund relativer außermittiger Positionen können auch Asymmetrien in der Magnetisierung oder unsymmetrische Ausbildungen von Luftspaltbegrenzungen zu einer resultierenden Magnetkraft führen, die eine radiale Komponente aufweist.

Der zentrale materialfreie Bereich 150 sorgt nun dafür, daß die Probleme und insbesondere Verschleißprobleme aufgrund Asymmetrie wie beispielsweise Exzentrizität zwischen dem Läufer 106 und dem Stator 110 weitgehend vermieden sind.

Der Läufer 106 erfährt eine Kraft, welche sich aus der hydraulischen Kraft und der resultierenden Magnetkraft zusammensetzt. Er wirkt mit einer resultierenden Kraft auf die Kugel 138, deren resultierende Gegenkraft 168 (Figur 4) von der Kugel 138 auf die Lagerschale 140 ausgeübt wird. Die resultierende Gegenkraft 168 ist die Resultierende aus der hydraulischen Gegenkraft 170 und der resultierenden Gegenmagnetkraft 172. Wenn der Läufer 106 zentrisch angeordnet ist, das heißt seine Achse 122 mit der Achse 158 des Stators 110 zusammenfällt, dann ist bei isotroper Magnetisierung die radiale Komponente der resultierenden Gegenmagnetkraft 172 Null und die resultierende Gegenkraft 168 wirkt in Achsrichtung der Achse 122.

Ist jedoch der Läufer 106 unsymmetrisch bezüglich des Stators 110, beispielsweise indem ein paralleler Achsversatz zwischen den Achsen 122 und 158 vorhanden ist, wie in Figur 2 gezeigt, dann führen die divergenten Kraftlinien bei einem magnetfelderzeugenden Läufer 106 dazu, daß eine Radialkraftdifferenz vorliegt. Da zudem der Axialanteil der resultierenden Gegenmagnetkraft 172 relativ klein ist, wenn der Läufer 106 mit seinen Magnetelementen 116 eine geringe Bauhöhe in der Achse 122 aufweist, bedeutet dies, daß die resultierende Gegenkraft 168, wie in Figur 3 gezeigt, nicht mehr in der gleichen Richtung liegt wie die hydraulische Gegenkraft 170, das heißt auf der Achse 122, sondern in einem Winkel dazu.

Dies würde aber bedeuten, daß bei Asymmetrie zwischen Läufer 106 und Stator 110 die Kugel 138 außermittig auf die Lagerschale 140 drückt und die Lagerschale 140 dadurch einen entsprechenden Verschleiß erfährt. Der entsprechende Verschleißbereich an der Lagerschale 140 ist dabei aber nicht sphärisch symmetrisch. Es würde sich in ihr ein Ringkanal bilden, was wiederum dazu führt, daß die Lagerschale 140 bei Rotation um den Gleitkörper 138 eine einseitige Abrollbewegung aufnimmt, anstatt vollflächig auf der Kugeloberfläche des Gleitkörpers 138 zu gleiten. Dies führt zu einer Unwucht, zu erhöhter Geräuschbildung und zu weiter zunehmendem nicht-sphärischem Verschleiß.

Es ist nun der zentrale materialfreie Bereich 150 so angeordnet und so ausgebildet, daß die resultierende Gegenkraft 168 eben auf einen materialfreien Bereich trifft, das heißt auf einen freigeschnittenen Bereich. Dieser ist so groß, daß der Kraftvektor 168 auf Fluid trifft, jedoch nicht auf Festkörpermaterial der Lagerschale 140. Dadurch kann auch bei schrägen Kraftvektoren 168 kein nicht-sphärischer Verschleiß der Lagerschale 140 entstehen, so daß über längere Zeit die weitgehend spielfreie Lagerung des Läufers 106 in dem Gehäuse 104 gewährleistet ist.

Der erfindungsgemäße Rückschlußkörper 114 ist aus einem pulvergepreßten Material mit weichmagnetischen Eigenschaften hergestellt. Dadurch ergeben sich eine Vielzahl von Formgestaltungsmöglichkeiten für den Rückschlußkörper 114, um so je nach Anwendung die Funktion des Elektromotors 100 und insbesondere der Umwälzpumpe 102 zu optimieren.

Geeignete Pulvermaterialien zur Herstellung des Rückschlußkörpers 114 sind beispielsweise unter der Bezeichnung SOMALOY 500 bekannte Metallpulver der Firma Höganäs AB, Schweden (SOMALOY ist eine eingetragene Marke der Firma Höganäs AB). Dieses Pulvermaterial weist weichmagnetische Eisenkörner auf, die elektrisch voneinander isoliert sind. Dadurch ergeben sich die gewünschten weichmagnetischen Eigenschaften für den Rückschlußkörper 114, wobei jedoch Wirbelstromverluste minimiert sind.

Der Rückschlußkörper 114 ist kompakt ausgebildet oder weist kompakte Einzelelemente auf, die miteinander verbunden sind. Dadurch läßt sich eine optimierte Magnetfeldaufnahme und Ableitung zu dem Läufer 106 hin erreichen. Der Rückschlußkörper 114 kann einteilig und insbesondere einstückig ausgebildet sein oder auch mehrteilig ausgebildet sein.

Der Rückschlußkörper 114 ist dabei dem Läufer 106 zugewandt sphärisch ausgebildet, das heißt weist mindestens segmentweise einen sphärischen Oberflächenbereich 202 auf (Figur 4), welcher dem sphärischen Oberflächenbereich 118 des Läufers 106 zugewandt ist. Die entsprechenden Kugeln, welche Einhüllende dieser Oberflächenbereiche 118 und 202 sind, liegen dabei im wesentlichen konzentrisch (das heißt ihre jeweiligen Mittelpunkte fallen zusammen).

Bei einem ersten Ausführungsbeispiel eines erfindungsgemäßen Rückschlußkörpers, welcher in den Figuren 4 bis 6 gezeigt ist und dort als Ganzes mit 204 bezeichnet ist, ist dieser Rückschlußkörper 204 einstückig als Ring ausgebildet, welcher eine Mehrzahl von Segmenten 206 umfaßt, die jeweils einen dem Läufer 106 zugewandten sphärischen Oberflächenbereich 202 aufweisen.

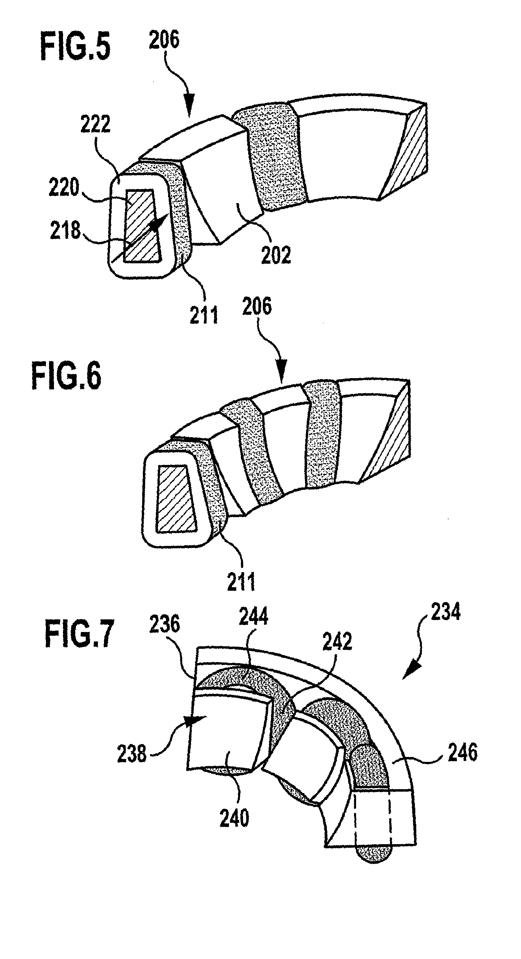

Zwischen benachbarten Segmenten 206 ist jeweils eine Wicklungsaufnahme oder Spulenaufnahme 208 gebildet, um jeweils eine Spule 211 mit einer Mehrzahl von Windungen (Figur 5, 6) aufzunehmen.

Die jeweiligen Spulenaufnahmen 208 sind dabei mittels Ausnehmungen 210 gebildet, welche gegenüber dem sphärischen Oberflächenbereich 202 zurückgesetzt sind; eine Ausnehmung 210 weist somit einen Bereich 212 auf, welcher bezüglich des sphärischen Oberflächenbereichs 202 der benachbarten Segmente 206 vertieft ist.

Dadurch weist eine Spulenaufnahme 208 ein Halteelement 214 auf, auf welches die jeweilige Spule 211 aufwickelbar oder aufsetzbar ist. Das Halteelement 214 ist dabei mit einer elektrischen Isolierung versehen wie beispielsweise einer Kunststoffschicht oder einem Kunststoffaufsatz, auf welchem dann die Spule 211 sitzt.

Die Spulenaufnahme 208 mit der Ausnehmung 210 ist dabei so dimensioniert, daß bei aufgenommener Spule 211 und insbesondere auf das Halteelement 214 aufgewickelter Spule 211 die Spule nicht über einen sphärischen Bereich hinausragt, welcher durch die einhüllende Fläche aller sphärischen Oberflächenbereiche 202 der Segmente 206 gebildet ist. Damit ragen die Spulen 211 des Rückschlußkörpers 204 nicht in den Luftspalt 128 zwischen dem Läufer 106 und dem Rückschlußkörper 204. Der Luftspalt 128 ist damit wicklungsfrei.

Dadurch wiederum läßt sich in Zusammenwirkung mit der sphärischen Geometrie von Läufer 106 und Rückschlußkörper 114 ein optimierter hoher Füllgrad erreichen, da sich der Rückschlußkörper 114 zumindest teilweise (mit seinem sphärischen Oberflächenbereich) sehr nahe an dem Läufer 106 anordnen läßt. Es ergibt sich dann eine großflächige Magnetflußbeaufschlagung des Läufers 106 über den Rückschlußkörper 114. Auf diese Weise lassen sich sehr hohe elektrische Wirkungsgrade realisieren, da ein hoher Magnetflußtransport durch den Luftspalt 128 gewährleistet ist.

Die Wand 132, welche insbesondere druckresistent sein muß und chemisch resistent, ist in dem Luftspalt 128 angeordnet. Der Luftspalt 128 ist dabei so ausgebildet, daß der kugelschalenförmige Spalt zwischen der Trennwand 132 und dem Läufer 106 so breit ist, daß Reibungseffekte die Rotation des Läufers 106 nicht wesentlich bremsen. Durch den erfindungsgemäßen Rückschlußkörper 114 läßt sich so eine Optimierung zwischen Reibungsminimierung (großer Luftspalt 128) und Feldbeaufschlagung des Läufers 106 (kleiner Luftspalt 128) erreichen.

Bei dem Ausführungsbeispiel 204 sind die Halteelemente 214 in Umfangsrichtung 216 eines Kreises orientiert. Eine Spulenachse 218 (Figur 5), welche eine Wicklungsachse darstellt, ist bei diesem Ausführungsbeispiel im wesentlichen parallel zu dieser Umfangsrichtung 216 orientiert. Die Spule 211 umgibt dann das Halteelement 214, wobei sie dieses an einer Isolierungszwischenlage berührt bzw. selber mit einer Isolierung versehen ist. Der Kontaktbereich mit dem Halteelement 214 ist dabei ein Innenbereich 220 der jeweiligen Spule 211, wobei in diesem Innenbereich 220 der wesentliche Anteil des Magnetfelds der Spule 211 erzeugt wird.

Ferner weist die jeweilige Spule 211 einen Kontaktbereich 222 mit dem Rückschlußkörper 204 auf, in dem die jeweiligen Enden der Spulen an die Begrenzungswände der Ausnehmungen 210 der Segmente 206 anliegen, wobei eine Isolierungszwischenlage vorgesehen ist.

Durch eine solche Ausbildung läßt sich erreichen, daß in dem Bereich, in dem der wesentliche Teil des Magnetfelds erzeugt wird, der Rückschlußkörper 204 (über das Halteelement 214) einen minimierten Querschnitt aufweist der ausreicht, einen Magnetfluß unterhalb der Sättigung des Materials des Rückschlußkörpers zu transportieren, während dann der Magnetfluß übertragende Bereich, nämlich im wesentlichen die Summe der sphärischen Oberflächenbereiche 202 der Segmente 206, eine große Fläche aufweist, um den Magnetfluß weitgehend verlustfrei durch den Luftspalt 128 zu transportieren.

Auf diese Weise läßt sich der Wicklungsanteil im Stator 110 minimieren und insbesondere lassen sich die Spulen 211 näher an eine optimierte runde Gestalt anpassen. Dadurch wird der Materialaufwand für die Spulen 211 minimiert. Weiterhin läßt sich ein hoher elektrischer Wirkungsgrad für den Elektromotor erreichen.

Bei einer Variante, welche in Figur 6 gezeigt, ist die Anzahl der Segmente 206 gegenüber dem Ausführungsbeispiel gemäß Figur 5 erhöht, um so einen höherpoligen Elektromotor zu bilden.

Insbesondere bei einem einstückigen Rückschlußkörper 204 ist es vorgesehen, daß die Spulen 211 direkt auf die Halteelemente 214 der jeweiligen Spulenaufnahmen 208 mit isolierender Zwischenlage gewickelt werden.

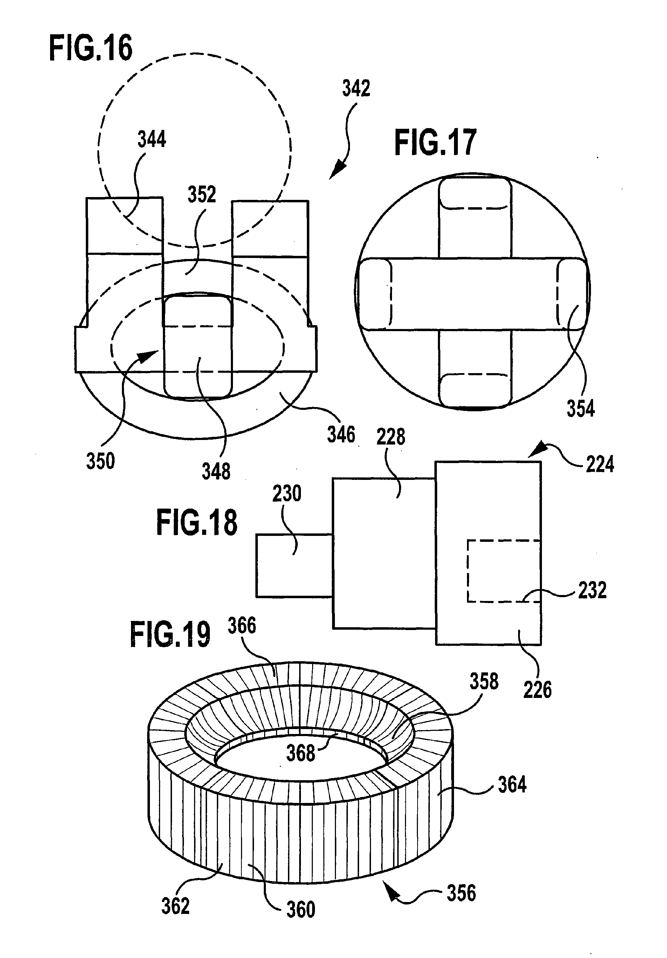

Es kann aber auch vorgesehen sein, daß die Spulen vorgefertigt werden und dann auf die Halteelemente aufgesteckt werden. Die Spulen weisen dann jeweils eine Isolierung auf und/oder die Halteelemente werden mit einer solchen versehen. In diesem Fall ist der Rückschlußkörper mehrstückig ausgebildet und umfaßt, wie beispielhaft in Figur 18 gezeigt, eine Mehrzahl von Rückschlußkörper-Elementen 224, welche zu einem ringförmigen Rückschlußkörper zusammensetzbar sind. Insbesondere sind diese Rückschlußkörper-Elemente 224 so ausgebildet, daß sie zusammensteckbar sind.

Dazu umfaßt ein solches Rückschlußkörper-Element 224 einen ersten Bereich 226, welcher mit der sphärischen Oberfläche versehen ist, welche dem Läufer 106 zugewandt positioniert ist. An den ersten Bereich schließt sich ein zweiter Bereich 228 an, welcher die Spulenaufnahme bildet und dadurch gegenüber dem ersten Bereich 226 zumindest in Relation zu dessen sphärischer Oberfläche zurückgesetzt ist. Insbesondere bildet dieser zweite Bereich 228 das Halteelement für die zugeordnete Spule.

An dem zweiten Bereich sitzt ein Stiftelement 230, welches in eine Ausnehmung 232 eines benachbarten Rückschlußkörper-Elements einschiebbar ist.

Entsprechend läßt sich dann mit einer Mehrzahl solcher Rückschlußkörper-Elemente 224 ein Rückschlußkörper-Ring zusammenstecken. Die Spulen können vor dem Zusammenstecken vorgefertigt auf den zweiten Bereich 228 aufgeschoben werden. Ansonsten funktioniert der mit Rückschlußkörper-Elementen 224 gebildete Rückschlußkörper wie oben beschrieben. Die einzelnen Segmente mit sphärischer Oberfläche können an den Rückschlußkörper-Elementen gebildet sein oder auch über benachbarte Elemente gebildet sein.

Bei einem zweiten Ausführungsbeispiel eines erfindungsgemäßen Rückschlußkörpers, welcher in Figur 7 als Ganzes mit 234 bezeichnet ist, sind Spulenaufnahmen 236 vorgesehen, welche an jeweiligen Segmenten 238 mit dem Läufer 106 zugewandten sphärischen Oberflächenbereichen versehen sind.

Zwischen beabstandeten Segmenten 238 ist dem Läufer 106 zugewandt jeweils eine Ausnehmung 242 gebildet, die ein Teil einer von der jeweiligen Spulenaufnahme 236 gehaltenen Spule 244 aufnimmt. (Bei dem Ausführungsbeispiel gemäß den Figuren 4 bis 6 sind die Spulen 211 vollständig in den jeweiligen Ausnehmungen 210 angeordnet, während bei dem Ausführungsbeispiel 234 nur ein Teil der Spulen 244 in den Ausnehmungen 242 angeordnet sind.)

Die Spulen 244 weisen eine Spulenachse auf, die bezüglich des Rückschlußkörpers 234 radial orientiert ist, das heißt die entsprechenden Spulenachsen sind zu der Rotationsachse 122 hin gerichtet. Die Spulen 244 sind somit um die Segmente 238 gewickelt bzw. auf diese aufgesetzt, wobei die jeweiligen Segmente 238 insbesondere selber Ausnehmungen aufweisen, in welchen dann die jeweiligen Spulen 244 angeordnet sind.

Es kann dabei vorgesehen sein, daß der Rückschlußkörper 234 einen hochgezogenen äußeren Rand 246 aufweist, beispielsweise in der Form eines Randwulstes, so daß die Spulen 244 nicht über den oberen Bereich des Rückschlußkörpers hinausragen. Dieser Randwulst kann auch zur Positionierung insbesondere in radialer Richtung der Spulen 244 dienen.

Auch bei diesem Ausführungsbeispiel ragen die Spulen 244 nicht in den Luftspalt 128.

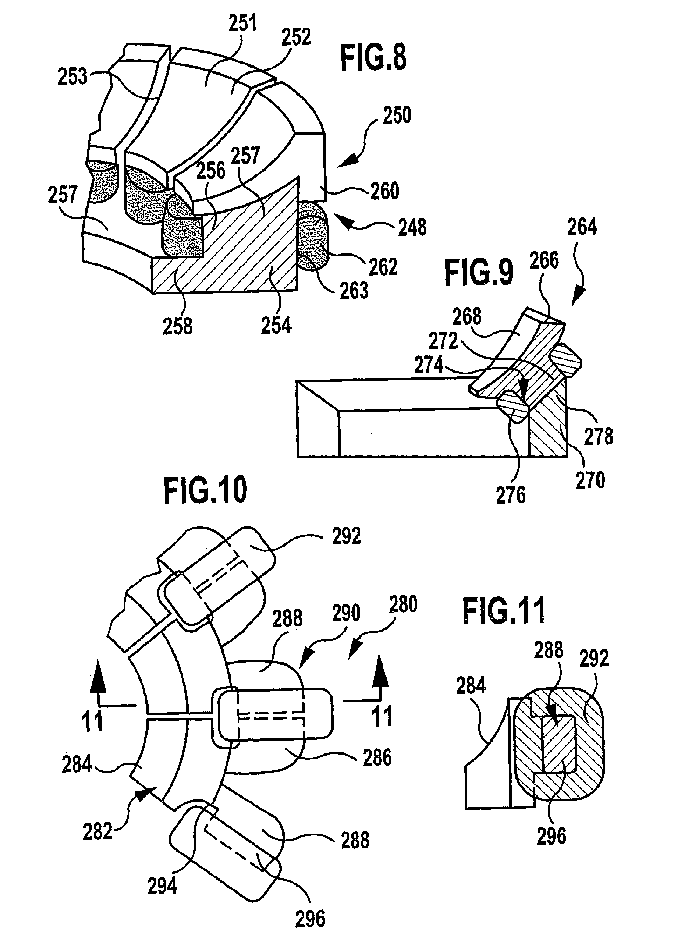

Bei einem dritten Ausführungsbeispiel eines erfindungsgemäßen Rückschlußkörpers 248 (Figur 8) umfaßt dieser einen Ringbereich 250, welcher ringförmig um den Läufer 106 angeordnet ist und eine Mehrzahl von Segmenten 251 aufweist, die dem Läufer zugewandte sphärische Oberflächen 252 haben.

Zwischen benachbarten Segmenten 251 ist ein Spalt 253 gebildet, um diese magnetisch zu trennen.

Der Rückschlußkörper 248 umfaßt ferner ein Verbindungsteil 254, welches eine Rückschlußverbindung zwischen gegenüberliegenden und insbesondere diametral gegenüberliegenden Segmenten 251 des Ringbereichs 250 bereitstellt. Das Verbindungsteil 254 weist dazu eine Erstreckung quer zu der Ringachse des Ringbereichs 250 auf. Die Anzahl der Verbindungsteile 254 entspricht vorzugsweise der halben Anzahl der Segmente 251. Das Verbindungsteil 254 weist einen Haltebereich 256 in der Form eines Zahnes 257 auf, welcher das zugeordnete Segment 206 hält.

Diese Zähne sitzen einstückig an einem Verbindungsbereich 258, welcher beispielsweise scheibenförmig ausgebildet ist und über den der Magnetfluß ableitbar ist.

Der Haltebereich 256 ist in seiner Formgebung an den Ringbereich 250 angepaßt, um einen sicheren Halt der Segmente 251 an dem Verbindungsteil 254 zu ermöglichen, ohne den Magnetfluß im wesentlichen zu behindern. Es kann dabei beispielsweise vorgesehen sein, daß ein Segment 251 jeweils eine ringförmige Lippe 260 aufweist, mit welchem dieses über den zugeordneten Zahn 257 des Haltebereichs 256 setzbar ist.

Der Haltebereich 256 ist mit Ausnehmungen versehen, in denen jeweilige Spulen 262 angeordnet sind. Ein Teil dieser Ausnehmungen ist durch die Spalte 253 gebildet. Ein weiterer Teil ist durch eine sich radial erstreckende Ausnehmung 259 zwischen den Zähnen 257 gebildet. Spulenachsen dieser Spulen 262 sind dabei im wesentlichen parallel zur Drehachse 122 orientiert und über den Umfang des ringförmigen Haltebereichs 256 sektorenweise gleichmäßig verteilt.

Die Spulen 262 sitzen dadurch unterhalb des Ringbereichs 250 mit den sphärischen Oberflächen 252 und ragen damit nicht in den Luftspalt 128.

Insbesondere ist es vorgesehen, daß eine dem Ringbereich 250 zugewandte Fläche des Verbindungsbereichs 258 eine Anlagenfläche für die Spulen 262 bereitstellt (mit einer Zwischenisolierung), um so eine leichte Positionierung zu ermöglichen.

Die Spulen 262 können auf ihre jeweiligen Spulenaufnahmen 263 an den Haltebereichen 256 aufgewickelt werden oder aufgesteckt werden, bevor die Segmente 251 auf das Verbindungsteil 254 gesetzt werden und mit diesem fixiert werden. Wie oben beschrieben ist dabei eine Isolierung zur elektrischen Trennung zwischen Rückschlußkörper 248 und Windungen der Spulen 262 vorgesehen.

Bei einem vierten Ausführungsbeispiel eines erfindungsgemäßen Rückschlußkörpers, welches in Figur 9 gezeigt und dort als Ganzes mit 264 bezeichnet ist, ist ebenfalls ein segmentierter Ringbereich 266 mit sphärischen Oberflächenbereichen 268 an den Segmenten vorgesehen. Zwischen benachbarten Segmenten liegt ein Spalt. Ein Verbindungsteil 270 verbindet gegenüberliegende Segmente des Ringbereichs 266.

An den Segmenten des Ringbereichs 266 ist jeweils ein Flansch 272 angeordnet, über den die Segmente an dem Verbindungsteil 270 sitzen.

Durch den Flansch 272 ist jeweils eine Spulenaufnahme 274 für eine Spule 276 gebildet.

Der Flansch 272 ist dabei so orientiert, daß er schräg zur Drehachse 122 liegt. Insbesondere ist die Orientierung derart, daß bei aufgesetzten Spulen 276 die Spulenachsen durch den Kugelmittelpunkt der sphärischen Oberfläche 268 gehen.

Das Verbindungsteil 270 weist eine schräge Stirnfläche 278 auf, um die jeweiligen Flansche 272 aufnehmen zu können.

Bei dem Rückschlußkörper 264 sitzen die Spulen 276 hinter der sphärischen Oberfläche 268, so daß sich auch hier ein großer Flächenbereich dem Läufer 106 zugewandt ergibt.

Bei den Ausführungsbeispielen gemäß Figur 8 und 9 erfolgt die magnetische Verbindung zwischen einzelnen Segmenten unterhalb der (gedachten) Kugel, welche die dem Läufer zugewandten sphärischen Oberflächen bildet.

Bei einem fünften Ausführungsbeispiel eines erfindungsgemäßen Rückschlußkörpers, welcher in den Figuren 10 und 11 gezeigt ist und dort als Ganzes mit 280 bezeichnet ist, ist dieser Rückschlußkörper aus einer Mehrzahl von getrennten Elementen 282 zusammengesetzt.

Ein entsprechendes Element 282 weist dabei gegenüberliegende äußere Begrenzungswände auf, welche in radialen Richtungen liegen, so daß zwischen ihnen das Element 282 sektorartig liegt. Die jeweiligen Elemente 282 weisen dem Läufer 106 zugewandt eine sphärischen Oberflächenbereich 284 auf und stellen somit ein Segment mit sphärischer Oberfläche dar.

Diesem sphärischen Oberflächenbereich 284 abgewandt sitzen nach hinten ein erstes Flanschteil 286 und ein zweites Flanschteil 288, wobei das erste Flanschteil 286 mit dem zweiten Flanschteil 288 eines benachbarten Elementes kooperiert und das zweite Flanschteil 288 mit dem ersten Flanschteil 286 eines zur anderen Seite hin benachbarten Elementes kooperiert.

Die beiden Flanschteile 286, 288 bilden an benachbarten Elementen 282 jeweils Spulenaufnahmen 290 für Spulen 292, die dann hinter den sphärischen Oberflächen 284 sitzen.

Die jeweiligen Elemente 282 weisen dazu Ausnehmungen 294 auf, in denen zumindest teilweise die Spulen 292 angeordnet sind.

Die Flanschteile 286 weisen entsprechende Halteelemente 296 auf, welche in radialer Richtung die jeweiligen Ausnehmungen 294 begrenzen. Auf diese Halteelemente 296 sind (mit Isolierungszwischenlagen) die Spulen 292 gewickelt oder aufgesteckt, wobei die jeweiligen Spulenachsen in Umfangsrichtung oder zumindest tangential zur Umfangsrichtung liegen.

Eine Spule 292 läßt sich auf ein Halteelement 296 beispielsweise des ersten Flanschteils 286 eines Elementes 282 aufsetzen. Es wird dann ein benachbartes Element mit dem Element 282 verbunden und insbesondere mit diesem zusammengesteckt. Dadurch wird die Spule auch auf das Halteelement 296 des benachbarten Elementes, welche an dessen zweiten Flanschteil 288 sitzt, aufgeschoben. Die Spulen 292 sind dadurch an Spulenaufnahmen 290 gehalten, welche sich über zwei Elemente 282, nämlich benachbarte Elemente 282 erstrecken. Der magnetische Rückschluß erfolgt dann über benachbarte Elemente 282.

Der Elektromotor wurde anhand einer Ausführungsform eines Synchronläufers 106 mit Permanentmagneten beschrieben. Es ist auch möglich, die erfindungsgemäße Lösung für die Rückschlußkörper bei anderen Läufervarianten wie Käfigläufern und Hystereseläufern einzusetzen.

Es ist ebenso möglich, Gleichstrom-Elektromotoren oder Wechselstrom-Elektromotoren mit erfindungsgemäßen Rückschlußkörpern auszubilden.

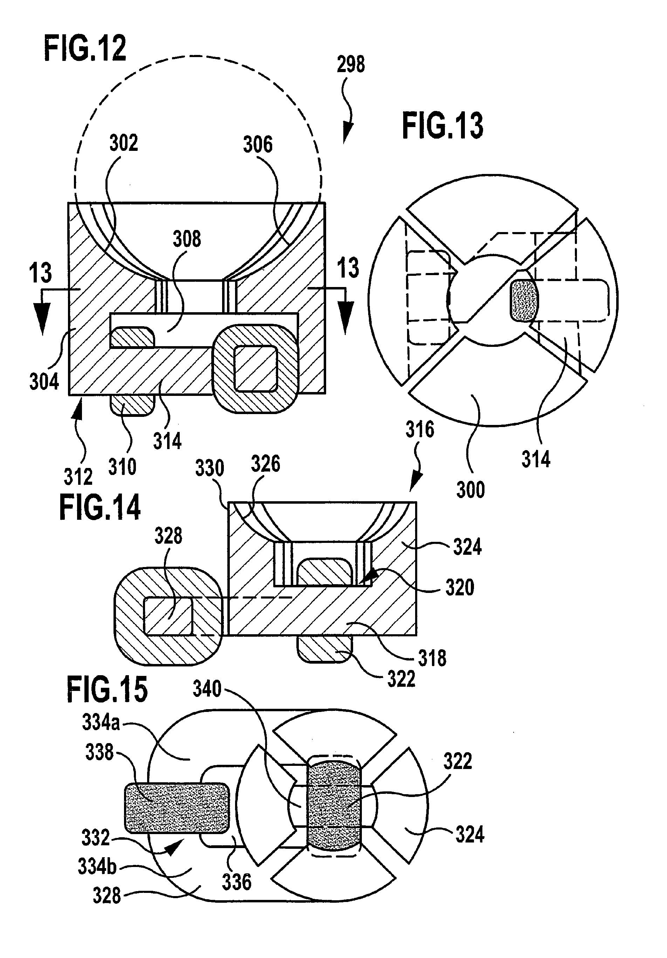

Bei einem sechsten Ausführungsbeispiel eines erfindungsgemäßen Rückschlußkörpers, welches in den Figuren 12 und 13 gezeigt und dort als Ganzes mit 298 bezeichnet ist, weist der Rückschlußkörper eine Mehrzahl von Elementen 300 auf, welche zusammengesetzt den Rückschlußkörper 298 bilden. Diese Elemente 300 weisen einen dem Läufer zugewandten sphärischen Oberflächenbereich 302 auf, das heißt der Rückschlußkörper 298 ist entsprechend segmentiert. Die Elemente 300 weisen dabei weiterhin eine Erstreckung unterhalb dieses sphärischen Bereichs in einem Haltebereich 304 auf. Dieser Haltebereich ist somit unterhalb einer gedachten Kugel 306 angeordnet, welche den sphärischen Oberflächenbereich 302 aller Sektoren 300 begrenzt (das heißt die Flächeneinhüllende dieser sphärischen Oberflächenbereiche 302 bilden).

In diesem Haltebereich 304 ist jeweils eine Ausnehmung 308 gebildet, um beispielsweise pro Element 300 oder zwei Elementen 300 zugeordnet jeweils eine Spule 310 aufnehmen zu können. Die so gebildete Spulenaufnahme 312 umfaßt einen Haltesteg 314, auf welchen die jeweilige Spule 310 aufgesteckt oder direkt aufgewickelt ist (mit Zwischenisolierung).

Bei entsprechender Anordnung und Ausbildung der Haltestege 314 läßt es sich erreichen, daß unterhalb des sphärischen Oberflächenbereichs 302 des Rückschlußkörpers 298 Spulen 310 mit quer liegenden Achsen positionierbar sind.

Bei entsprechender Anpassung der Elemente aneinander läßt sich dann der Rückschlußkörper 298 aus diesen Einzelelementen zusammensetzen.

Bei einem siebten Ausführungsbeispiel eines erfindungsgemäßen Rückschlußkörpers, welcher in den Figuren 14 und 15 gezeigt und dort als Ganzes mit 316 bezeichnet ist, umfaßt dieser ein Halteelement 318, mittels welchem eine Spulenaufnahme 320 gebildet ist. Auf diesem Halteelement 318 sitzt eine Spule 322 mit einer Spulenachse quer zur Drehachse des Läufers und insbesondere senkrecht dazu, wobei die Spule 322 zentriert sitzt. Eine Symmetrieachse der Spule 322 (Spiegelachse), welche senkrecht zur Spulenachse liegt, fällt mit der Drehachse zusammen.

An dem Halteelement 318 sitzen Rückschlußkörpersegmente 324, welche jeweils einen sphärischen Oberflächenbereich 326 aufweisen.

Es sind dabei beispielsweise vier Segmente 324 vorgesehen, wobei zwei gegenüberliegende Segmente durch das Halteelement 318 in der Art eines Steges verbunden sind.

Die beiden anderen gegenüberliegenden Segmente sind über ein weiteres Halteelement 328 verbunden, wobei dieses weitere Halteelement 328 über eine Seitenfläche 330 des Rückschlußkörpers 316 hinausragt. Das Halteelement 328 ist beispielsweise U-förmig ausgestaltet.

An dem Halteelement 328 ist ebenfalls eine Spulenaufnahme 332 gebildet, wobei zwischen gegenüberliegenden Armen 334a, 334b eine Ausnehmung 336 zur teilweisen Aufnahme einer Spule 338 gebildet ist. Die Spule 338 weist dabei eine Spulenachse auf, die quer und insbesondere senkrecht zu derjenigen der Spule 322 liegt.

Die Spule 338 liegt damit außerhalb eines zylindrischen Bereichs, welcher die sphärischen Oberflächen 302 umfaßt, und unterhalb der Kugel, welche die Einhüllende dieser sphärischen Oberflächen ist. Die Spule 322 liegt innerhalb des zylindrischen Bereichs und unterhalb der Einhüllenden-Kugel.

Der Rückschlußkörper 316 weist zwischen den gegenüberliegenden Segmenten 324 eine Ausnehmung 340 auf, um eben die Spulenaufnahme 320 zur Aufnahme der Spule 322 zu bilden. In dieser Ausnehmung sitzt die Spule 322 zumindest teilweise.

Bei einem achten Ausführungsbeispiel eines erfindungsgemäßen Rückschlußkörpers, welcher in den Figuren 16 und 17 gezeigt ist und dort als Ganzes mit 342 bezeichnet ist, ist wiederum ein sphärischer Oberflächenbereich 344 vorgesehen, welcher dem Läufer zugewandt ist.

Unterhalb dieses sphärischen Oberflächenbereiches sitzt mindestens eine Spule 346, die symmetrisch bezüglich einer Drehachse des Läufers orientiert ist. Die Spulenachse liegt quer und insbesondere senkrecht zu dieser Drehachse. Ein Querschnitt dieser Spule 346 erstreckt sich dabei über im wesentlichen die gesamte Breite des Rückschlußkörpers 342.

Dieser umfaßt dazu ein Halteelement 348, auf welches die Spule 346 aufgesetzt oder aufgewickelt ist. Dieses Halteelement 348 ist Teil einer Spulenaufnahme 350, die auch eine Ausnehmung 352 im Rückschlußkörper 342 umfaßt, in der die Spule 346 teilweise aufgenommen ist.

Ferner ist eine Ausnehmung 354 vorgesehen, welche sich über die Breite des Rückschlußkörpers 342 erstreckt, so daß eben die Spule auch symmetrisch zur Drehachse über die Breite des Rückschlußkörpers in diesem positionierbar ist. Bei einer zweipoligen Ausgestaltung sind zwei Spulen vorgesehen und die Spulenachsen der Spulen liegen quer und insbesondere senkrecht zueinander.

Wird der Rückschlußkörper mit einem gepreßten Pulvermaterial hergestellt, dann ergeben sich umfangreiche Möglichkeiten bezüglich der Geometriewahl. Insbesondere lassen sich dreidimensionale definierte Formgebungen realisieren. Bei Ausbildung einer zumindest segmentweise sphärischen Oberfläche 202, welche dem Läufer 106 zugewandt ist, läßt sich der Luftspalt 128 minimieren, wobei sich der bezüglich des Magnetflusses übertragende Bereich mit ausreichend großer Fläche ausgestalten läßt. Weiterhin läßt sich der Wicklungsanteil ("Kupferanteil") am Stator 110 minimieren, da die Spulenaufnahmen zur Aufnahme der Wicklungen optimierbar sind. Es ergeben sich dann hohe Wirkungsgrade bei geringerem Materialeinsatz.

Es kann auch vorgesehen sein, daß ein Rückschlußkörper 356 (Figur 19) einstückig ringförmig ausgebildet ist mit einem sphärischen Oberflächenbereich 358, welcher dem Läufer zugewandt ist.

Auf diesen Rückschlußkörper 356 sind mehrere getrennte Spulen 360 gewickelt, welche toroidförmig sind. Diese Spulen 360 sind dabei an die Gestalt des ringförmigen Rückschlußkörpers 356 angepaßt. Ihre Spulenachse liegt dabei in Umfangsrichtung, wobei die Spulenachse gekrümmt und insbesondere Teil eines Kreises ist. Der Rückschlußkörper 356 als Ganzes bildet somit die Spulenaufnahme.

Eine Spule 360 sitzt so auf dem Rückschlußkörper 356, daß ihre Windungen 362 an diesen anliegen. Eine Außenseite 364 des Rückschlußkörpers 356 weist dabei eine zylindrische Oberfläche auf. Die Windungen 362 sind zwischen dieser zylindrischen Oberfläche und der sphärischen Oberfläche 358 anliegend geführt. Der Übergangsbereich ist durch ringförmige Stirnflächen 366, 368 gebildet.

Die Windungen liegen beispielsweise in einem Winkel zu einer Achse des Rückschlußkörpers 356, um das Anlegen zu ermöglichen. Insbesondere können die einzelnen Windungen 362 aus einem Flachmaterial gebildet sein, um so eine Wicklung zu erzielen, die optimal der Kontur des Rückschlußkörpers 356 folgt.

Bei dieser Ausführungsform liegen Wicklungsteile im Luftspalt 128, wobei der Anteil am gesamten Wicklungsanteil jedoch minimierbar ist.

## Patentansprüche

1. Elektromotor, umfassend einen Läufer (106) und einen Stator (110), wobei der Läufer (106) sphärisch gelagert ist und dem Stator (110) zugewandt sphärisch ausgebildet ist,
**dadurch gekennzeichnet, daß** der Stator (110) einen magnetischen Rückschlußkörper (114; 204; 234; 248; 264; 280; 298; 316; 342; 356) aufweist, welcher aus einem gepreßten Pulvermaterial hergestellt ist, und daß der Rückschlußkörper dem Läufer (106) zugewandt mindestens segmentweise sphärisch ausgebildet ist.

2. Elektromotor nach Anspruch 1, **dadurch gekennzeichnet, daß** der Rückschlußkörper (114) ein kompakter Körper ist oder kompakte Rückschlußkörper-Elemente (224) umfaßt.

3. Elektromotor nach Anspruch 1 oder 2, **dadurch gekennzeichnet, daß** der Rückschlußkörper aus einer Mehrzahl von Rückschlußkörper-Elementen (224) zusammengesetzt ist.

4. Elektromotor nach Anspruch 3, **dadurch gekennzeichnet, daß** benachbarte Rückschlußkörper-Elemente (224) über eine Steckverbindung verbunden sind.

5. Elektromotor nach einem der vorangehenden Ansprüche, **dadurch gekennzeichnet, daß** der Rückschlußkörper (204; 248) eine Mehrzahl von Segmenten (206; 251) umfaßt, welche dem Stator zugewandt jeweils eine sphärische Oberfläche (202; 252) aufweisen.

6. Elektromotor nach Anspruch 5, **dadurch gekennzeichnet, daß** benachbarte Segmente (251) magnetisch getrennt sind.

7. Elektromotor nach Anspruch 5 oder 6, **dadurch gekennzeichnet, daß** zwischen benachbarten Segmenten (251) ein Spalt (253) gebildet ist.

8. Elektromotor nach einem der Ansprüche 5 bis 7, **dadurch gekennzeichnet, daß** Segmente (251) miteinander über einen Rückschlußbereich (25) verbunden sind.

9. Elektromotor nach einem der vorangehenden Ansprüche, **dadurch gekennzeichnet, daß** der Rückschlußkörper (114) den Läufer (106) ringförmig umgibt.

10. Elektromotor nach einem der vorangehenden Ansprüche, **dadurch gekennzeichnet, daß** das Pulvermaterial Eisenkörner umfaßt, welche gegeneinander elektrisch isoliert sind.

11. Elektromotor nach einem der vorangehenden Ansprüche, **dadurch gekennzeichnet, daß** der Rückschlußkörper (204) mindestens eine Spulenaufnahme (208) aufweist.

12. Elektromotor nach Anspruch 11, **dadurch gekennzeichnet, daß** die Spulenaufnahme (208) mit einer elektrischen Isolierung versehen ist und/oder eine aufgenommene Spule (211) zur Spulenaufnahme (208) hin mit einer elektrischen Isolierung versehen ist.

13. Elektromotor nach Anspruch 11 oder 12, **dadurch gekennzeichnet, daß** die mindestens eine Spulenaufnahme (208) so angeordnet und ausgebildet ist, daß aufgenommene Spulen (211) nicht über den sphärischen Bereich des Rückschlußkörpers in Richtung des Läufers (106) hinausragen.

14. Elektromotor nach einem der Ansprüche 11 bis 13, **dadurch gekennzeichnet, daß** ein Luftspalt (128), welcher zwischen dem Läufer (106) und dem sphärischen Bereich (102) des Rückschlußkörpers (114) gebildet ist, spulenfrei ist.

15. Elektromotor nach einem der Ansprüche 11 bis 14, **dadurch gekennzeichnet, daß** der Rückschlußkörper (204; 280) eine Mehrzahl von Ausnehmungen (210; 294) als Spulenaufnahmen oder zur Bildung von Spulenaufnahmen aufweist.

16. Elektromotor nach Anspruch 15, **dadurch gekennzeichnet, daß** eine Ausnehmung (210), welche einen dem Läufer (106) zugewandten Bereich hat, gegenüber der sphärischen Oberfläche (202) des Rückschlußkörpers (204) zurückgesetzt ist.

17. Elektromotor nach einem der Ansprüche 11 bis 16, **dadurch gekennzeichnet, daß** eine Spule (211) auf eine Spulenaufnahme (208) gewickelt ist.

18. Elektromotor nach einem der Ansprüche 11 bis 17, **dadurch gekennzeichnet, daß** eine vorgefertigte Spule auf eine Spulenaufnahme (228) gesteckt ist.

19. Elektromotor nach einem der Ansprüche 10 bis 18, **dadurch gekennzeichnet, daß** eine Spulenaufnahme (208) so dimensioniert ist, daß der Anteil des Rückschlußkörpers (204), welcher im Bereich des erzeugten Magnetfelds der aufgenommenen Spule (211) liegt, wesentlich kleiner ist als der Bereich (202) des Rückschlußkörpers (204), welcher das erzeugte Magnetfeld auf den Läufer (106) hin überträgt.

20. Elektromotor nach einem der Ansprüche 10 bis 19, **dadurch gekennzeichnet, daß** eine Spulenaufnahme so dimensioniert ist, daß ein ausreichender Bereich des Rückschlußkörpers (204) bereitgestellt ist, um Magnetfluß unterhalb der Sättigung zu transportieren.

21. Elektromotor nach einem der Ansprüche 10 bis 20, **dadurch gekennzeichnet, daß** eine Spulenaufnahme (208) so ausgebildet ist, daß eine Spule (211) mit rundem oder näherungsweise rundem Querschnitt aufnehmbar ist.

22. Elektromotor nach einem der Ansprüche 10 bis 21, **dadurch gekennzeichnet, daß** der Rückschlußkörper (204) eine Mehrzahl von benachbarten Ausnehmungen (210) als Spulenaufnahmen (208) aufweist, welche gegenüber der sphärischen Oberfläche (202) zurückgesetzt sind.

23. Elektromotor nach Anspruch 22, **dadurch gekennzeichnet, daß** die Ausnehmungen (210) gleichmäßig verteilt um einen Innenumfang des Rückschlußkörpers (204) angeordnet sind.

24. Elektromotor nach Anspruch 22 oder 23, **dadurch gekennzeichnet, daß** eine Spulenachse einer in der Spulenaufnahme (208) sitzenden Spule (211) im wesentlichen in Umfangsrichtung des Rückschlußkörpers (204) liegt.

25. Elektromotor nach Anspruch 22 oder 23, **dadurch gekennzeichnet, daß** eine Spulenachse einer in der Spulenaufnahme (236) sitzenden Spule (244) im wesentlichen radial ausgerichtet ist.

26. Elektromotor nach einem der Ansprüche 10 bis 21, **dadurch gekennzeichnet, daß** die mindestens eine Spulenaufnahme (264; 274) hinter oder unter dem dem Läufer (106) zugewandten sphärischen Oberflächenbereich (252; 268) des Rückschlußkörpers (248; 264) angeordnet ist.

27. Elektromotor nach Anspruch 26, **dadurch gekennzeichnet, daß** der Rückschlußkörper (24) einen quer zu einer Drehachse (122) des Läufers (106) liegenden Verbindungsbereich (258) aufweist, welcher eine magnetische Querverbindung bereitstellt.

28. Elektromotor nach Anspruch 27, **dadurch gekennzeichnet, daß** die mindestens eine Spulenaufnahme (264) an dem Verbindungsbereich (258) gebildet ist.

29. Elektromotor nach einem der vorangehenden Ansprüche, **dadurch gekennzeichnet, daß** der Läufer ein Käfigläufer ist.

30. Elektromotor nach einem der Ansprüche 1 bis 28, **dadurch gekennzeichnet, daß** der Läufer (106) magnetfelderzeugend ist.

31. Elektromotor nach Anspruch 30, **dadurch gekennzeichnet, daß** der Läufer (106) eine Mehrzahl von Permanentmagneten umfaßt.

32. Elektromotor nach einem der Ansprüche 1 bis 28, **dadurch gekennzeichnet, daß** der Läufer ein Hystereseläufer ist.

33. Elektromotor nach einem der Ansprüche 1 bis 12, **dadurch gekennzeichnet, daß** eine Mehrzahl Spulen (360) als torusförmige Windungen (362) auf dem Rückschlußkörper (356) angeordnet sind.

34. Elektromotor nach Anspruch 33, **dadurch gekennzeichnet, daß** eine Windungsachse im wesentlichen parallel zu einer Umfangsrichtung des Rückschlußkörpers (356) ist.

35. Elektromotor nach Anspruch 33 oder 34, **dadurch gekennzeichnet, daß** der Rückschlußkörper (356) einstückig ausgebildet ist.

36. Elektromotor nach einem der Ansprüche 33 bis 35, **dadurch gekennzeichnet, daß** benachbarte Spulen (360) getrennt geschaltet sind.

37. Umwälzpumpe, welche einen Elektromotor gemäß einem der vorangehenden Ansprüche aufweist.

38. Umwälzpumpe nach Anspruch 37, **dadurch gekennzeichnet, daß** eine Trennwand (132) in einem Luftspalt (128) zwischen Läufer (106) und Rückschlußkörper (114) angeordnet ist.

39. Umwälzpumpe nach Anspruch 38, **dadurch gekennzeichnet, daß** der Luftspalt (128) so dimensioniert ist, daß der Läufer (106) in dem Bereich zwischen Trennwand (132) und Läufer (106) nicht wesentlich reibungsgebremst wird.
